Europäisches Patentamt

European Patent Office

Office européen des brevets

(19)

(11) Numéro de publication: **0 143 685**
**B1**

## (12) FASCICULE DE BREVET EUROPEEN

(45) Date de publication du fascicule du brevet:
**27.09.89**

(21) Numéro de dépôt: **84402090.9**

(22) Date de dépôt: **17.10.84**

(51) Int. Cl.⁴: **G 01 G 19/00, D 06 F 39/00**

(54) Procédé de détermination d'une charge de linge dans un tambour tournant, et machine à laver et/ou à sécher mettant en oeuvre ce procédé.

(30) Priorité: **25.10.83 FR 8316997**

(43) Date de publication de la demande:
**05.06.85 Bulletin 85/23**

(45) Mention de la délivrance du brevet:
**27.09.89 Bulletin 89/39**

(84) Etats contractants désignés:
**DE FR IT SE**

(56) Documents cités:
**EP-A- 0 042 190**
**EP-A- 0 090 716**
**DE-A- 2 920 492**
**GB-A- 2 063 927**
**US-A- 3 818 754**
**US-A- 4 235 085**

(73) Titulaire: **ESSWEIN S.A., Route de Cholet, F-85002 La
Roche-sur-Yon (FR)**

(72) Inventeur: **Didier, Laurent, THOMSON-CSF SCPI 173, bld
Haussmann, F-75379 Paris Cedex 08 (FR)**
Inventeur: **Geay, Jean-Claude, THOMSON-CSF
SCPI 173, bld Haussmann, F-75379 Paris Cedex 08 (FR)**

(74) Mandataire: **Phan, Chi Quy et al, THOMSON-CSF SCPI,
F-92045 PARIS LA DEFENSE CEDEX 67 (FR)**

EP 0 143 685 B1

## Description

La présente invention concerne un procédé de détermination d'une charge de linge dans un tambour tournant, et une machine à laver et/ou à sécher mettant en œuvre ce procédé.

Jusqu'à présent les machines à laver et/ou à sécher le linge ont connu différentes étapes dans leur automatisation. Tout d'abord elles sont semi-automatiques, puis automatiques avec un programmateur électromécanique avec lequel un choix de programme peut être fait parmi un nombre limité de programmes prédéterminés, enfin automatiques avec un programme optimum de fonctionnement déterminé par programmation d'un dispositif tel qu'un microprocesseur à partir des données indiquées par l'utilisateur concernant le linge, telles que le poids ou la masse de linge, le type de linge, son degré de salissure, la température etc... Les contraintes de l'utilisateur dans la commande des machines s'avèrent nombreuses. Fréquemment l'utilisateur n'ayant pas à sa portée un moyen de pesage, indique à ces machines un poids approximatif de linge qui accuse quelquefois un grand écart avec son poids réel. Une donnée inexacte indiquée aux machines compromet fortement le résultat à attendre d'un programme optimum de leur fonctionnement étant donné que pour une masse d'un type déterminé de linge et d'un degré de salissure donné, un lavage ou un rinçage optimum de linge exige normalement au moins une quantité prédéterminée d'eau pour chaque bain, une température préétablie de bain de lavage, une énergie préalablement choisie de brassage, une intensité prévue du rinçage (nombre de bains), une intensité présélectionnée d'essorage (temps et vitesse d'essorage), et un séchage optimum du linge exige habituellement une température choisie de séchage et une durée prédéterminée de cette opération. Dans une machine à laver et/ou à sécher, la donnée de masse de linge associée à celle du type de linge (coton, linge éponge, synthétique, etc...) induit une donnée bien connue de charge de linge. Cette donnée de charge de linge correspond globalement au pourcentage de volume du tambour, occupé par le linge durant le fonctionnement de la machine. La connaissance de cette charge de linge est indispensable dans une bonne détermination des paramètres rappelés ci-dessus de fonctionnement de la machine, en particulier des niveaux d'eau nécessaires à chaque bain de lavage ou de rinçage de cette charge de linge. Plus cette charge de linge est importante, plus le niveau d'eau dans la cuve de la machine nécessaire à son lavage et son rinçage est grand ou plus la durée de séchage est longue.

Pour obtenir un bon résultat de lavage et/ou de séchage, l'utilisateur est obligé de donner des indications précises à la machine.

Dans la publication US-A-4 235 085 est décrite une solution selon laquelle dans une machine à laver à tambour à linge entraîné par un moteur électrique, la détermination du poids du linge dans ce tambour à partir soit du temps T que met ce moteur électrique pour atteindre un nombre N prédéterminé de tours (plus le poids de linge dans ce tambour est important, plus le temps T que met ce moteur pour atteindre le nombre N de tours est grand) soit de l'intensité I atteinte par le courant électrique traversant ce moteur à l'issue de ce temps T, est fait avec un tambour chargé de linge et d'eau. En outre, cette solution peut donner le poids du linge dans le tambour mais ce poids ne révèle absolument pas les données du type de ce linge (coton, linge éponge...) autrement dit, cette solution ne permet pas de déterminer une charge de linge. Or la connaissance d'une masse d'un type déterminé de linge communément appelée charge de linge rappelée dans un paragraphe précédent est indispensable dans une bonne détermination des paramètres de fonctionnement de la machine.

Par ailleurs, la publication EP-A-42 190 dévoile un procédé de détermination de la nature du linge, caractérisé en ce que le volume d'eau absorbé par unité de poids de linge est comparée à trois types de linge, linge absorbant ou linge peu ou non absorbant. Ceci est fait par une pesée du linge et par une mesure de la hauteur et du volume d'eau dans le tambour d'une machine pour choisir un programme de lavage approprié. Ce procédé a l'inconvénient d'introduire dans la machine une quantité arbitraire d'eau et non une quantité optimale d'eau, car le remplissage en eau est déterminé par une hauteur arbitraire de référence d'eau dans le tambour.

La présente invention visant à diminuer les contraintes de l'utilisateur dans la commande d'une machine à laver et/ou à sécher le linge, et à éviter les inconvénients ci-dessus, a pour objet un procédé de détermination d'une charge de linge dans un tambour tournant.

L'invention permet de réaliser une machine à laver et/ou à sécher automatique et économique qui détermine par ses propres moyens l'état de charge en linge, la quantité ou le niveau d'eau correspondant à cette charge de linge pour chaque bain de lavage et de rinçage et les autres éléments d'un programme de lavage optimum en fonction de la température de lavage et éventuellement du degré de salissure indiqués par l'utilisateur et dans le programme optimum de séchage du linge, la durée de séchage, en fonction de la température de séchage et du degré d'humidité du linge en fin de séchage indiquées par l'utilisateur.

Selon l'invention, le procédé de détermination de la charge de linge sec ou essoré dans un tambour tournant d'une machine à laver et/ou à sécher le linge, autrement dit la détermination de données de masse de linge sec ou essoré associée à celle du type de ce linge dans le tambour, comprenant une détermination du moment d'inertie de la masse de linge sec ou essoré dans ce tambour, à partir d'une valeur mesurée de l'accélération du tambour, et d'une valeur mesurée du couple moteur d'entraînement de ce tambour correspondant à cette accélération dans une phase de montée de vitesses de ce tambour.

Une machine à laver et/ou à sécher le linge à tambour entraîné par un moteur, mettant en œuvre le procédé ci-dessus est caractérisée en ce qu'elle comprend au moins:

– un moteur d'entraînement du tambour,

– un moyen mesurant une valeur de l'accélération du moteur, choisi parmi un accéléromètre, un système à génératrice tachymétrique,

– un moyen mesurant une valeur du couple moteur correspondant d'entraînement de ce tambour,

– un moyen saisissant des données mesurées de l'accélération du tambour, du couple moteur d'entraînement de ce tambour correspondant à cette accélération, et déterminant le moment d'inertie de la masse de linge sec ou essoré introduit dans ce tambour à partir de ces données,

– et un programmateur déterminant la charge de linge.

Pour mieux faire comprendre l'invention, on décrit ci-après un certain nombre d'exemples de réalisation illustré par les dessins ci-annexés dont:

– la figure 1 représente un diagramme d'une séquence de vitesse en fonction du temps imposé au tambour d'une machine à laver et/ou à sècher conforme à l'invention, dans une détermination de la charge du linge dans ce tambour,

– la figure 2 représente des courbes d'intensités efficaces en fonction du temps fournies à un moteur universel d'entraînement du tambour de la machine durant la sèquence de vitesse, illustrée dans la figure 1, imposée à ce tambour,

– la figure 3 représente deux courbes d'intensités en fonction de la masse de linge de deux types de linge, fournies au moteur universel d'entraînement du tambour de la machine durant la phase de montée en vitesse à forte accélération constante de ce tambour, dans la séquence de vitesse illustrée dans la figure 1,

– la figure 4 représente un schéma simplifié d'un programmateur de la machine dont le tambour est soumis à une séquence de vitesse de la figure 1 et

– la figure 5 présente une courbe de charge de linge en fonction de l'intensité absorbée par le moteur de la figure 3.

Selon l'invention, le procédé de détermination d'une masse de linge dans un tambour tournant est applicable à une machine à laver le linge, à une machine à sécher le linge ou à une machine à laver et sécher le linge.

Ce procèdé de détermination d'une charge de linge dans un tambour tournant consiste à déterminer le moment d'inertie de la masse de linge dans le tambour, qui est l'image de la charge de linge à partir des données du couple moteur ou couple d'entraînement du tambour, de l'accélération du tambour, du couple de frottement et du moment d'inertie de ce tambour.

Selon ce procédè, le linge introduit dans le tambour est un linge sec dans son état en fin d'essorage.

Ce procédé comprend au moins les étapes suivantes:

– faire tourner le tambour chargé de linge sec ou linge après essorage suivant une séquence de vitesses comportant une phase de basse vitesse constante de rotation, une phase de haute vitesse constante de rotation et une phase de montée en vitesse entre cette basse vitesse constante de rotation et cette haute vitesse constante de rotation,

– enregistrer dans chacune des phases de cette séquence de vitesses de rotation au moins une valeur de l'accélération du tambour et une valeur du couple moteur ou couple correspondant d'entraînement de ce tambour,

– déterminer le moment d'inerte de la masse de linge dans le tambour, qui est l'image de la charge de linge à partir de ces valeurs, enregistrées, de la valeur prédéterminée du moment d'inertie du tambour en rotation, et de la valeur du couple de frottement du tambour tournant dans la phase de montée en vitesse, évaluée approximativement à une moyenne arithmétique des couples de frottement dans les phases à basse vitesse constante et à haute vitesse constante.

Ces données ont entre elles une relation connue d'égalité qui se présente sous la forme suivante:

$$C_e = (L + J_o) \frac{dw}{dt} + C_f$$

dans laquelle  $C_e$ est le couple d'entraînement du tambour
$C_f$ est le couple de frottement du tambour
L est le moment d'inertie de la masse de linge
$J_o$ est le moment d'inertie du tambour tournant
w est la vitesse de rotation du tambour

$\frac{dw}{dt}$ est l'accélération.

On remarque que dans les phases à basse vitesse constante de rotation du tambour et à haute vitesse constante de rotation du tambour, l'accélération

$$\frac{dw}{dt}$$

est nulle, et les valeurs du couple d'entraînement du tambour enregistré sont égales à celles du couple de frottement de ce tambour. Le couple de frottement du tambour en rotation ($C_{fa}$) dans la phase de montée en vitesse du tambour entre la basse vitesse constante et la haute vitesse constante de ce tambour est selon l'invention approximativement évaluée à une moyenne arithmétique des couples de frottement du tambour dans ces phases à basse vitesse constante ($C_{fb}$) et à haute vitesse constante ($C_{fh}$):

$$C_{fa} = \frac{C_{fb} + C_{fh}}{2}$$

Le moment d'inertie L de la masse de linge, dans la relation d'égalité ci-dessus peut alors se présenter sous la forme suivante:

$$L = \frac{1}{\frac{dw}{dt}} (C_e - J_o \frac{dw}{dt} - C_{fa})$$

Des essais ont été faits dans une même machine à laver, avec une masse identique de linge de plusieurs types de linge tels que coton, linge éponge, synthétique. On a constaté que le moment d'inertie L d'un linge éponge est plus grand que le moment d'inertie L d'un linge coton tandis que le moment d'inertie L d'un linge synthétique est sensiblement équivalent à celui d'un linge coton. On a constaté également que durant le fonctionnement de la machine, le volume occupé dans le tambour par cette masse de linge éponge est plus grand que celui occupé par une masse identique de linge coton ou de linge synthétique. Le moment d'inertie L d'une masse de linge d'un type donné de linge reflète ainsi bien l'image de charge correspondante de linge de ce type de linge, qui, comme cela a été indiqué dans un paragraphe plus haut, correspond au pourcentage de volume du tambour occupé par ce linge durant le fonctionnement de la machine.

Selon le procédé de l'invention, les données sur le moment d'inertie d'une masse de linge d'un type donné de linge qui est l'image de charge correspondante de linge constitue une base pour une détermination de certains paramètres de fonctionnement de la machine déjà rappelés dans un paragraphe précédent.

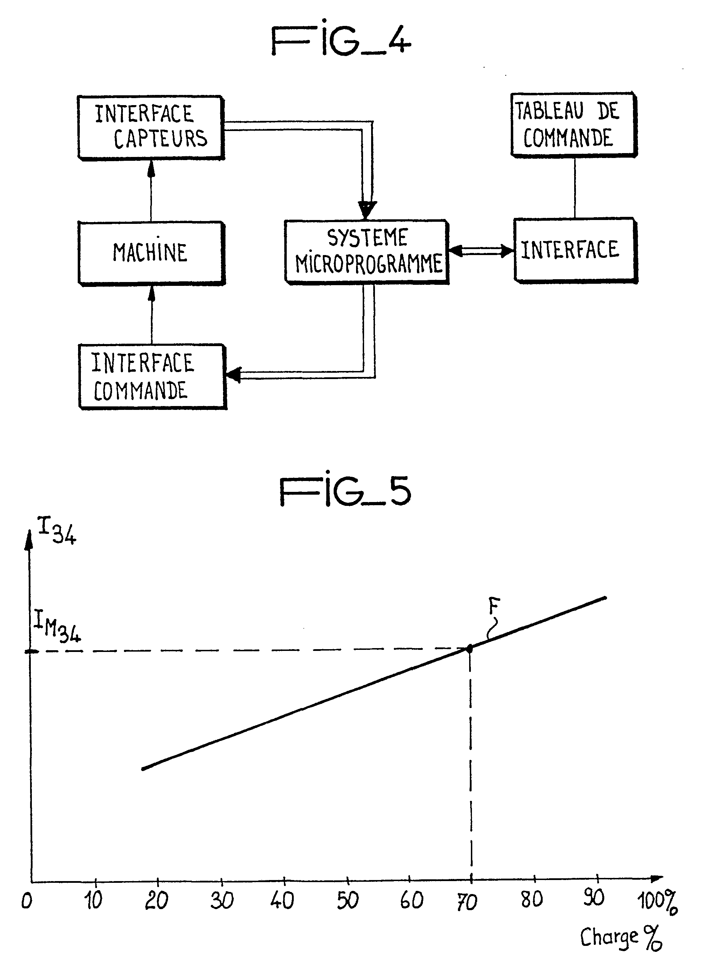

Dans un premier exemple de mise en œuvre du procédé ci-dessus, une machine à laver et/ou à sécher ayant pour son fonctionnement automatique un programmateur à système de micro-programme d'un type connu schématiquement illustré dans la figure 4, est pourvu d'un moyen pour capter les données de l'accélération du tambour, constitué par un accéléromètre ou un système à génératrice tachymétrique du type connu, et d'un moyen pour capter les données de couple moteur ou couple d'entraînement de ce tambour qui est également un capteur de type connu.

Les valeurs données connues ou pouvant être préalablement déterminées qui se trouvent dans la relation d'égalité ci-dessus telles que le moment d'inertie du tambour $J_o$, le couple de frottement du tambour $C_{fa}$ etc. sont préalablement enregistrés ou mémorisés par le programmateur.

Dans la commande de cette machine à laver et/ou à sécher l'utilisateur indique seulement à la machine la température, éventuellement le degré de salissure et/ou le degré d'humidité du linge en fin de séchage tandis que la machine par ses propres moyens détermine à partir des données captées et enregistrées ou mémorisées ci-dessus, le moment d'inertie de la masse de linge introduit dans la machine et par conséquent la charge de linge dont ce moment d'inertie est l'image et détermine un programme optimum de fonctionnement avec la quantité ou le niveau d'eau correspondant à cette charge de linge pour chaque bain de lavage et de rinçage et les autres éléments du programme éliminant ainsi notamment le risque d'une indication inexacte de la masse ou poids de linge, habituellement commise par l'utilisateur. L'invention contribue ainsi à diminuer les contraintes de l'utilisateur et à améliorer les résultats attendus de la machine.

Selon une variante, le procédé de détermination de la charge de linge dans un tambour tournant comprend au moins les étapes suivantes:

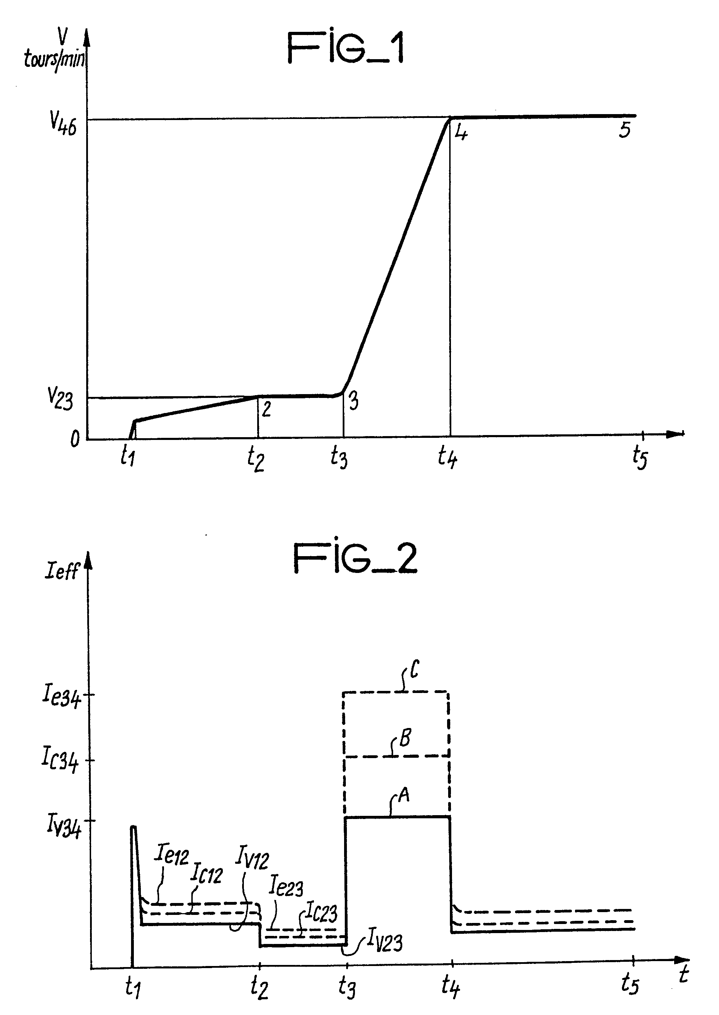

– faire tourner le tambour chargé de linge sec ou linge en fin d'essorage suivant une séquence de vitesses en fonction du temps illustrée dans la figure 1, comportant à titre d'exemple une phase de montée lente en vitesse entre 0 et 100 tours par minute afin de réaliser une bonne répartition du linge à l'intérieur du tambour, une phase de basse vitesse constante de 100 tours par minute en vue de stabiliser le tassage du linge contre la paroi du tambour, une phase de montée en vitesse à forte accélération constante entre 100 tours par minute et 500 à 800 tours par minute, et une phase de haute vitesse constate de 500 à 800 tours par minute, au moyen d'un moteur électrique dont le couple moteur est substantiellement proportionnel à l'intensité fournie à ce moteur, ou constitue une fonction affine de l'intensité fournie à ce moteur,

– enregistrer dans chacune des phases de cette séquence de vitesses de rotation du tambour, les données de l'intensité fournie au moteur d'entraînement de ce tambour et les données de l'accélération du tambour,

– déterminer le moment d'inertie de la masse du linge dans le tambour en rotation qui est l'image de la charge de linge à partir de ces données enregistrées, du moment d'inertie prédéterminé du tambour vide et de la valeur du couple de frottement du tambour, tournant dans la phase de montée en vitesse à forte accélération, évaluée approximativement à une moyenne arithmétique des couples de frottement dans les phases à basse vitesse constante et à haute vitesse constante de rotation du tambour. Les données ci-dessus ont entre elles une relation connue d'égalité suivante:

$$C_m = (L + J_o) \frac{dw}{dt} + C_f$$

dans laquelle    $C_m$ est le couple moteur d'entraînement du tambour,
                       $C_f$ est le couple de frottement du tambour
                       L est le moment d'inertie de la masse de linge en rotation,

$J_o$ est le moment d'inertie du tambour tournant w est la vitesse de rotation du tambour

$\dfrac{dw}{dt}$ est l'accélération.

On remarque que dans les phases à basse vitesse constante de rotation du tambour et à haute vitesse constante de rotation du tambour, l'accélération

$$\dfrac{(dw)}{dt}$$

est nulle et les valeurs du couple moteur ($C_m$) sont égales à celles du couple de frottement de ce tambour.

Dans la phase de montée en vitesse à forte accélération entre la phase à basse vitesse constante, et la phase à haute vitesse constante de rotation du tambour, l'accélération est constante.

Le couple de frottement du tambour en rotation dans la phase de montée en vitesse à forte accélération ($C_{fa}$) est selon l'invention évaluée approximativement à une moyenne arithmétique des couples de frottement du tambour dans les phases à basse vitesse constante ($C_{fb}$) et à haute vitesse constante ($C_{fh}$):

$$C_{fa} = \dfrac{C_{fb} + C_{fh}}{2}$$

Le moment d'inertie L de la masse de linge, dans la relation d'égalité ci-dessus peut alors se présenter sous la forme suivante:

$$L = \dfrac{1}{\dfrac{dw}{dt}}\left(C_m - J_o\,\dfrac{dw}{dt} - C_{fa}\right)$$

Cette valeur de L représente l'image de la charge de linge.

Dans un deuxième exemple qui met en œuvre cette variante de procédé, une machine à laver et/ou sécher ayant pour son fonctionnement automatique, un programmateur à système de microprogramme d'un type connu schématiquement illustré dans la figure 4, est pourvue, comme moteur électrique d'entraînement du tambour, d'un moteur universel connu dont le couple moteur ($C_m$) est substantiellement proportionnel à l'intensité fournie à ce moteur, ou constitue une fonction affinie de cette intensité

$$C_m = K(I - I_o)$$

dans laquelle K et $I_o$ sont des constantes dépendantes de la structure de ce moteur et I est l'intensité fournie à ce moteur. Cette machine à laver et/ou à sécher est pourvue, en outre, d'un régulateur de vitesse d'un type connu donnant dans la phase de montée en vitesse à forte accélération, une consigne déterminée de vitesse de ce moteur fonction linéaire du temps, et par conséquent une accélération constante, déterminée et d'un moyen de capter les données de l'intensité fournie à ce moteur universel. Quand on impose au tambour de la machine une séquence de vitesse selon la courbe illustrée dans la figure 1, le capteur de données de l'intensité fournie au moteur universel saisit des données de l'intensité qui permettent de tracer une courbe de l'intensité en fonction du temps (figure 2). Dans la figure 2 sont représentées, superposées trois courbes A, B, C d'intensité fournie au moteur universel. La courbe A ($I_v$ en fonction du temps) représente le cas où le tambour de la machine est vide. La courbe B ($I_c$ en fonction du temps) représente le cas où le tambour est chargé d'une masse M de linge en coton ou synthétique, et la courbe C ($I_e$ en fonction du temps) représente le cas où le tambour est chargé d'une même masse M de linge éponge.

Dans la séquence de vitesse illustrée à la figure 1 entre le temps $t_1$ et $t_2$ est une montée lente en vitesse du tambour afin de répartir régulièrement le linge à l'intérieur de ce tambour. Cette montée lente en vitesse correspond à l'intensité fournie au moteur $I_{12}$ entre le temps $t_1$ et $t_2$ dans la courbe de la figure 2. $I_{12}$ correspond aux frottements et à l'accélération dans la montée de la vitesse entre le démarrage et la vitesse $V_2$ du tambour. $I_{23}$ entre $t_2$ et $t_3$ correspond uniquement aux frottements étant donné que la vitesse du tambour est constante dans cet intervalle de temps ($V_2 = V_3$) et l'accélération est nulle. $I_{34}$ entre $t_3$ et $t_4$ correspond aux frottements et à la forte accélération constante, en montée en vitesse du tambour. $I_{45}$ entre $t_4$ et $t_5$ correspond uniquement aux frottements.

D'après ce qui précède, entre $t_2$ et $t_3$ le couple moteur $C_m$ est égal au couple de frottement:

$$C_m = C_{fb} = C_{f23}.$$

Entre $t_4$ et $t_5$ le couple moteur $C_m$ est aussi égal au couple de frottement

$$C_m = C_{fh} = C_{f45}.$$

Entre $t_3$ et $t_4$, le couple de frottement dans cette phase de montée en vitesse à forte accélération est évaluée selon l'invention à

$$C_{fa} = C_{f34} = \dfrac{C_{f23} + C_{f45}}{2}$$

Entre $t_3$ et $t_4$, le couple moteur est alors égal à

$$C_m = K(I_{34} - I_o) = (L + J_o)\dfrac{dw}{dt} + C_{f34}$$

Le moment d'inertie L de la masse du linge se présente sous la forme:

$$L = \dfrac{K\,I_{34}}{\dfrac{dw}{dt}} - \dfrac{K I_o}{\dfrac{dw}{dt}} - \dfrac{C_{f34}}{\dfrac{dw}{dt}} - J_o.$$

Ce moment d'inertie L est proportionnel à $I_{34}$ et la valeur du courant $I_{34}$ fournie au moteur universel dans cette phase de montée en vitesse à forte accélération constante du tambour, entre $t_3$ et $t_4$, reflète l'image de ce moment d'inertie de la masse de linge en rotation, et par conséquent l'image de cette charge de linge elle-même.

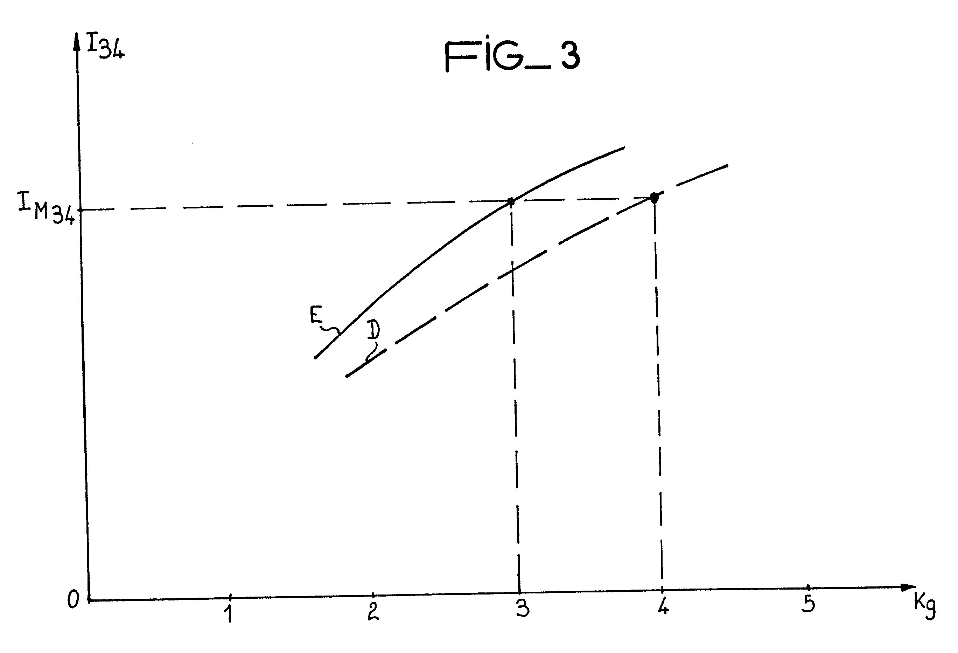

Dans un essai, pour un même linge de coton ou synthétique, on charge le tambour de la machine chaque fois avec un poids de linge plus grand et on impose à ce tambour chaque fois une séquence de vitesses illustrée dans la figure 1, on peut tracer (dans la figure 3) une courbe D d'intensité $I_{34}$ fournie au moteur universel, en fonction de la masse de linge de coton ou synthétique introduit dans le tambour.

Dans un autre essai pour un même linge éponge, on charge le tambour de la machine chaque fois avec un poids de linge plus grand et on impose à ce tambour chaque fois une séquence de vitesse illustrée dans la figure 1, on peut tracer sur les mêmes axes de coordonnées de la figure 3 une courbe E d'intensité $I_{34}$ fournie au moteur universel en fonction de la masse de linge éponge introduit dans le tambour.

On remarque que les courbes D et E ne sont pas confondues et que pour chaque valeur de courant $I_{34}$ correspond deux masses de linge de types différents. La valeur $I_{M34}$ de la figure 3 par exemple correspond à une masse de trois kilogrammes de linge éponge et à une masse de quatre kilogrammes de linge de coton ou synthétique.

Dans un paragraphe précédent, on a fait état des essais et on a constaté dans ceux-ci qu'une masse donnée de linge éponge correspond à une charge de linge plus importante que celle découlant d'une masse identique de linge de coton ou de linge synthétique.

Dans la figure 3, une même valeur $I_{34}$ correspond à deux masses de linge de types différents. Ceci n'est pas un inconvénient $I_{34}$ est une excellente donnée qui caractérise la charge de linge. $I_{34}$ est l'image du moment d'inertie L et de la charge de linge. Ceci confirme les constatations dans les essais précédents que le moment d'inertie L est l'image de la charge de linge. En effet, il y a une proportionnalité entre le courant $I_{34}$ absorbé par le moteur, et la charge du linge. Dans la figure 5 est établie une correspondance entre $I_{34}$ et la charge de linge du tambour. La courbe F représente $I_{34}$ en fonction de la charge de linge du tambour. $I_{M34}$ correspond à soixante dix pour cent environ de charge de linge du tambour.

Dans la machine réalisée selon l'invention, $I_{M34}$ constitue une donnée de base à une détermination du niveau d'eau par exemple nécessaire au lavage et au rinçage du linge parmi d'autres paramètres de fonctionnement de la machine.

Dans le cas d'une machine à sécher, $I_{34}$ est également une excellente donnée pour déterminer la durée optimale de séchage, car pour obtenir un même degré d'humidité en fin de séchage, un linge éponge exige relativement plus de temps de séchage qu'un linge de coton ou synthétique.

Le procédé de détermination d'une charge de linge dans un tambour tournant et la machine à laver et/ou à sécher mettant en œuvre ce procédé décrits ci-dessus permettent ainsi d'obtenir un meilleur et surprenant résultat de lavage et/ou de séchage que celui atteint par beaucoup de machines à laver et/ou à sécher connues et même celles dans lesquelles un poids exact de linge est indiqué par l'utilisateur. En outre, dans la machine à laver et/ou sécher décrite ci-dessus, les contraintes de l'utilisateur dans la commande de la machine sont réduites au minimum c'est-à-dire à une simple indication de température et du degré de salissure, sans compromettre l'efficacité de la machine dans la détermination d'un programme optimum de fonctionnement.

**Revendications**

1. Procédé de détermination de la charge de linge sec ou essoré dans un tambour tournant d'une machine à laver et/ou à sécher le linge, autrement dit la détermination de données de masse de linge sec ou essoré associée à celle du type de ce linge dans le tambour, comprenant une détermination du moment d'inertie de la masse de linge sec ou essoré dans ce tambour, à partir d'une valeur mesurée de l'accélération du tambour, et d'une valeur mesurée du couple moteur d'entraînement de ce tambour correspondant à cette accélération, dans une phase de montée de vitesses de ce tambour ($t_3$–$t_4$).

2. Procédé selon la revendication 1, caractérisé en ce qu'on détermine le moment d'inertie de la masse de linge dans le tambour en mesurant le couple d'entraînement du tambour à accélération constante enregistrée dans une phase de montée de vitesses de ce tambour ($t_3$–$t_4$).

3. Procédé selon la revendication 2, caractérisé en ce qu'il comprend au moins les étapes suivantes:
   – faire tourner le tambour à linge par un moteur électrique dont le couple moteur est proportionnel à l'intensité du courant électrique absorbé,
   – mesurer le couple d'entraînement du tambour à accélération constante enregistrée dans une phase de montée de vitesse de ce tambour ($t_3$–$t_4$) par une mesure de l'intensité du courant électrique traversant ce moteur électrique dans cette phase ($t_3$–$t_4$).

4. Procédé selon la revendication 1, caractérisé en ce qu'il comprend au moins les étapes suivantes:
   – faire tourner le tambour chargé de linge sec ou essoré suivant une séquence de vitesses comportant au moins une phase de basse vitesse constate de rotation ($t_2$–$t_3$), une phase de haute vitesse constante de rotation ($t_4$–$t_5$) et une phase de montée en vitesse ($t_3$–$t_4$) entre cette basse vitesse constante de rotation et cette haute vitesse constante de rotation,
   – enregistrer dans chacune des phases de cette séquence de vitesse de rotation au moins une valeur de l'accélération et une valeur du couple moteur ou couple d'entraînement de ce tambour correspondant,

– déterminer le moment d'inertie de la masse du linge sec ou essoré dans le tambour, à partir de ces valeurs enregistrées, du moment d'inertie prédéterminé du tambour en rotation à vide et de la valeur du couple de frottement du tambour à vide tournant dans la phase de montée en vitesse ($t_3$–$t_4$), évaluée approximativement à une moyenne arithmétique des couples de frottement dans les phases à basse vitesse constante ($t_2$–$t_3$) et à haute vitesse constante ($t_4$–$t_5$).

5. Procédé selon l'une des revendications 1 et 4, caractérisé en ce qu'il comprend au moins les étapes suivantes:

– faire tourner le tambour chargé de linge sec ou essoré suivant une séquence de vitesses comportant une phase ($t_1$–$t_2$) de montée en vitesse entre 0 et 100 tours par minute, une phase ($t_2$–$t_3$) de basse vitesse constante de 100 tours par minute, une phase ($t_3$–$t_4$) de montée en vitesse à accélération constante de 500 à 800 tours par minute, et une phase ($t_4$–$t_5$) de haute vitesse constante de 500 à 800 tours minute par un moteur électrique dont le couple moteur est substantiellement proportionnel à l'intensité fournie à ce moteur ou constitue une fonction affine de l'intensité fournie à ce moteur,

– enregistrer dans chaque des phases de cette séquence de vitesse de rotation, les données de l'intensité fournie à ce moteur et les données de l'accélération du tambour,

– déterminer le moment d'inertie de la masse de linge sec ou essoré dans le tambour, à partir de ces données enregistrées, du moment d'inertie prédéterminé du tambour vide et de la valeur du couple de frottement du tambour tournant dans la phase ($t_3$–$t_4$) de montée en vitesse à accélération constante, évaluée approximativement à la moyenne arithmétique des couples de frottement dans les phases à basse vitesse constante ($t_2$–$t_3$) et à haute vitesse constante ($t_4$–$t_5$).

6. Machine à laver et/ou à sécher le linge à tambour entraîné par un moteur, mettant en œuvre le procédé de l'une des revendications 1 à 5, caractérisée en ce qu'elle comprend au moins:

– un moteur d'entraînement du tambour,

– un moyen mesurant une valeur de l'accélération du tambour, choisi parmi un accéléromètre, un système à génératrice tachymétrique,

– un moyen mesurant une valeur du couple moteur d'entraînement de ce tambour,

– un moyen saisissant des données mesurées de l'accélération du tambour, du couple moteur d'entraînement de ce tambour correspondant à cette accélération, et déterminant le moment d'inertie de la masse de linge sec ou essoré introduit dans ce tambour à partir de ces données,

– et un programmateur déterminant la charge de linge.

7. Machine à laver et/ou à sécher le linge à tambour entraîné par un moteur électrique mettant en œuvre le procédé de l'une des revendications 1 à 5, caractérisée en ce qu'elle comprend au moins

– un moteur électrique d'entraînement du tambour ayant un couple moteur proportionnel à l'intensité du courant électrique absorbé,

– un moyen mesurant l'intensité du courant absorbé par le moteur électrique d'entraînement de ce tambour, et un moyen mémorisant une valeur moyenne prédéterminée du couple de frottement du tambour et une valeur prédéterminée du moment d'inertie du tambour tournant vide, saisissant des données mesurées de l'accélération du tambour et de l'intensité du courant absorbé par le moteur électrique d'entraînement de ce tambour et déterminant le moment d'inertie de la masse du linge sec ou essoré dans ce tambour à partir de ces données mesurées et prédéterminées mémorisées,

– et un programmateur déterminant la charge de linge.

8. Machine selon la revendication 7, caractérisée en ce que le moteur électrique est un moteur universel.

9. Machine selon l'une des revendications 7 et 8, caractérisée en ce qu'elle comprend un programmateur qui détermine, en fonction de l'intensité du courant ($I_{M34}$) traversant le moteur d'entraînement du tambour, la quantité d'eau de lavage et de rinçage et/ou la durée de séchage du linge.

10. Machine selon l'une des revendications 6 à 8, ayant pour son fonctionnement automatique un programmateur à système micro-programme, caractérisée en ce qu'elle comprend au moins un programmateur à système microprogramme opérant selon un processus préétabli, une détermination d'un programme optimum de fonctionnement en fonction de la charge de linge dans le tambour traduite par le moment d'inertie de la masse de linge dans ce tambour, et qui est déterminé à partir de données de l'accélération et de couple d'entraînement de ce tambour saisies, de données indiquées et de valeurs mémorisées de couple de frottement et du moment d'inertie de ce tambour à vide.

11. Machine selon la revendication 10, caractérisée en ce que dans la détermination d'un programme optimum de fonctionnement le système microprogramme fixe le niveau d'eau nécessaire au bain de lavage et de rinçage et/ou la durée de séchage du linge en fonction de l'intensité électrique fournie au moteur électrique d'entraînement du tambour.

**Claims**

1. A method for determining the charge of dry or dewatered laundry contained in a rotatable drum of a laundry washing and/or drying machine, i.e. for determining the mass data of dry or dewatered laundry associated with the information on the type of laundry in the drum, comprising a determination of the moment of inertia of the mass of dry or dewatered laundry in the drum for a measured value of acceleration of the drum and from a measured value of the motor torque for driving the drum corresponding to said acceleration, in a phase $(t_3-t_4)$ of rising speed of the drum.

2. A method according to claim 1, characterized in that the moment of inertia of the mass of laundry contained in the drum is determined by measuring the torque for driving of the drum at constant acceleration recorded during a phase $(t_3-t_4)$ of rising speed of the drum.

3. A method according to claim 2, characterized in that it includes at least the following steps:
   - causing the laundry drum to rotate by means of an electric motor, whose driving torque is proportional to the intensity of the received electric current,
   - measuring the driving torque of the drum at constant acceleration recorded during the phase $(t_3-t_4)$ of rising drum speed by measuring the intensity of the electric current flowing through the electric motor during said phase $(t_3-t_4)$.

4. A method according to claim 1, characterized in that it includes at least the following steps:
   - causing the drum charged with dry or dewatered laundry to rotate in accordance with a sequence of speeds, which comprises at least one phase of low constant speed of rotation $(t_2-t_3)$, one phase of high speed $(t_4-t_5)$ and one phase of rising speed $(t_3-t_4)$ comprised between said low constant speed of rotation and said high constant speed of rotation,
   - recording, in each of the phases of said sequence of speeds of rotation, at least one value of acceleration and one value of the motor torque or the corresponding torque for driving the drum,
   - determining the moment of inertia of the mass of dry or dewatered laundry contained in the drum from said recorded values, from the predetermined moment of inertia of the drum when rotating idle, and from the value of the friction torque of the drum when rotating idle during the phase of rising speed $(t_3-t_4)$, the latter value being evaluated approximately to amount to an arithmetic mean value of the friction torques occuring in the phase of low constant speed $(t_2-t_3)$ and of high constant speed $(t_4-t_5)$.

5. A method according to one of claims 1 to 4, characterized in that it comprises at least the following steps:
   - causing the drum charged with dry or dewatered laundry to rotate in accordance with a sequence of speeds comprising a phase $(t_1-t_2)$ of rising speed from 0 to 100 turns per minute, a phase $(t_2-t_3)$ of low constant speed of 100 turns per minute, a phase $(t_3-t_4)$ of rising speed at constant acceleration to between 500 and 800 turns per minute, and a phase $(t_4-t_5)$ of high constant speed at 500 to 800 turns per minute by means of an electric motor, whose motor torque is substantially proportional to the intensity of the current fed to the motor or constitutes an affine function of the intensity of said current,
   - recording in each of said phases of said sequence of speeds of rotation the intensity data of the current fed to said motor and also the acceleration data to the drum,

   - determining the moment of inertia of the mass of dry or dewatered laundry contained in the drum from said recorded data, from the predetermined moment of inertia of the empty drum and from the value of the friction torque of the drum rotating during the phase $(t_3-t_4)$ of rising speed at constant acceleration, which value is evaluated approximately to amount to the arithmetic mean value of the friction torques occuring in the phases of low constant speed $(t_2-t_3)$ and of high constant speed $(t_4-t_5)$.

6. A laundry washing and/or dewatering machine having a motordriven drum, adapted to implement the method according to any one of claims 1 to 5, characterized in that it includes at least:
   - a motor for driving the drum,
   - a means capable of measuring an acceleration value of the drum and being selected among an acceleration meter and a tacho generator system,
   - a means capable of measuring a value of the motor torque for driving the drum,
   - a means adapted to collect the measured data of the acceleration of the drum, of the motor torque for driving the drum corresponding to said acceleration, and to determine from said data the moment of inertia of the mass of dry or dewatered laundry fed into the drum.

7. A laundry washing and/or dewatering machine having a drum driven by an electric motor, adapted to implement the method according to any one of claims 1 to 5, characterized in that it includes at least:
   - an electric motor for driving the drum, the motor having a torque proportional to the intensity of the consumed electric current,
   - a means capable of measuring the intensity of the current consumed by the electric motor driving the drum, and a means adapted to store a predetermined mean value of the friction torque of the drum as well as of a predetermined value of the moment of inertia of the drum when running idle, these means being able to collect measured values of the drum acceleration and of the intensity of the current consumed by the electric motor driving the drum, and to determine the moment of inertia of the mass of dry or dewatered laundry contained in the drum from said measured and predetermined stored data, and
   - a programming unit adapted to determine the charge of the laundry.

8. A machine according to claim 7, characterized in that the electric motor is a universal type motor.

9. A machine according to one of claims 7 and 8, characterized in that it includes a programming unit, which determines the quantity of washing and rinsing water and/or the drying time for the laundry as a function of the intensity of the current $(I_{M34})$ fed to the motor for driving the drum.

10. A machine according to any one of claims 6 to 8, having a programming unit based upon a micro-program system, for ensuring automatic machine operation, characterized in that it includes at least a programming unit based upon a micro-program system adapted to carry out, in accordance with a pre-established process scheme, a determination of an optimum program of operation as a function of the charge of laundry contained in the drum, represented by the moment of inertia of the mass of laundry in the drum, the program being determined from the collected data relating to the acceleration and to the torque for driving said drum, from the indicated and data and measured values of the friction torque and of the moment of inertia of the empty drum.

11. A machine according to claim 10, characterized in that the process of determining an optimum program defines the necessary water level of the washing and rinsing pool and/or the laundry drying time as a function of the intensity of the electric current fed to the electric motor for driving the drum.

**Patentansprüche**

1. Verfahren zur Bestimmung des Füllgewichts trockener oder entwässerter Wäsche in einer umlaufenden Trommel einer Wasch- und/oder Trockenschleudermaschine, d.h. zur Bestimmung der Massedaten trockener oder entwässerter Wäsche, die mit dem Typ der in der Trommel befindlichen Wäsche verknüpft ist, wobei das Verfahren die Bestimmung des Massenträgheitsmoments der trockenen oder entwässerten Wäsche in der Trommel aufgrund eines gemessenen Beschleunigungswerts der Trommel sowie eines dieser Beschleunigung entsprechenden Meßwerts des Motordrehmoments des Trommelantriebs in einer Phase des Geschwindigkeitsanstiegs der Trommel ($t_3$–$t_4$) einschließt.

2. Verfahren nach Anspruch 1, dadurch gekennzeichnet, daß das Massenträgheitsmoment der Wäsche in der Trommel durch Messung des Drehmoments des Trommelantriebs bei konstanter, in einer Phase des Geschwindigkeitsanstiegs der Trommel ($t_3$–$t_4$) registrierter Beschleunigung bestimmt wird.

3. Verfahren nach Anspruch 2, dadurch gekennzeichnet, daß es mindestens die folgenden Schritte aufweist:
– Drehenlassen der Wäschetrommel durch einen Elektromotor, dessen Antriebsmoment proportional zur Stärke des aufgenommenen Stroms ist,
– Messen des Drehmoments der Trommel bei konstanter, in einer Phase des Geschwindigkeitsanstiegs der Trommel ($t_3$–$t_4$) registrierter Beschleunigung durch Messung der Stärke des vom Elektromotor in dieser Phase ($t_3$–$t_4$) aufgenommenen Stroms.

4. Verfahren nach Anspruch 1, dadurch gekennzeichnet, daß es mindestens die folgenden Schritte aufweist:
– Drehenlassen der mit trockener oder entwässerter Wäsche gefüllten Trommel gemäß einem Geschwindigkeitsprogramm, das mindestens eine Phase niedriger, konstanter Umlaufgeschwindigkeit ($t_2$–$t_3$), eine Phase hoher, konstanter Umlaufgeschwindigkeit ($t_4$–$t_5$) und eine Phase ansteigender Geschwindigkeit ($t_3$–$t_4$) zwischen der genannten niedrigen konstanten und der genannten hohen konstanten Geschwindigkeit umfaßt,
– Registrieren mindestens eines Beschleunigungswerts und eines Motor- oder entsprechenden Antriebsmoments der Trommel in jeder Phase des Drehgeschwindigkeitsprogramms,
– Bestimmen des Massenträgheitsmoments der trockenen oder entwässerten Wäsche in der Trommel aufgrund der registrierten Werte des vorausbestimmten Trägheitsmoments der leerdrehenden Trommel und des Wertes des Reibungsmoments der leer drehenden Trommel in der Phase des Geschwindigkeitsanstiegs ($t_3$–$t_4$), das annähernd auf den arithmetischen Mittelwert der Reibungsmomente in den Phasen niedriger ($t_2$–$t_3$) und hoher Geschwindigkeit ($t_4$–$t_5$) veranschlagt wird.

5. Verfahren nach einem der Ansprüche 1 und 4, dadurch gekennzeichnet, daß es mindestens die folgenden Schritte aufweist:
– Drehenlassen der mit trockener oder entwässerter Wäsche gefüllten Trommel gemäß einem Geschwindigkeitsprogramm, das eine Phase ($t_1$–$t_2$) ansteigender Geschwindigkeit von 0 bis 100 Umdrehungen pro Minute, eine Phase ($t_2$–$t_3$) niedriger konstanter Geschwindigkeit von 100 Umdrehungen pro Minute, eine Phase ($t_3$–$t_4$) ansteigender Geschwindigkeit bei konstanter Beschleunigung von 500 bis 800 Umdrehungen pro Minute und eine Phase ($t_4$–$t_5$) hoher konstanter Geschwindigkeit von 500 bis 800 Umdrehungen pro Minute umfaßt, wobei das Antriebsmoment des Elektromotors im wesentlichen der Stärke des an den Motor gelieferten Stroms proportional oder eine affine Funktion dieser Stromstärke ist,
– Registrieren der dem Motor gelieferten Stromstärke und der Beschleunigungsdaten der Trommel in jeder Phase des Drehgeschwindigkeitsprogramms,
– Bestimmen des Massenträgheitsmoments der trockenen oder entwässerten Wäsche in der Trommel aufgrund der registrierten Werte, des vorbestimmten Trägheitsmoments der leeren Trommel und des Reibungsmoments der drehenden Trommel in der Phase ($t_3$–$t_4$) des Geschwindigkeitsanstieges bei konstanter Beschleunigung, das annähernd auf den arithmetischen Mittelwert der Reibungsmomente in den Phasen niedriger ($t_2$–$t_3$) und hoher Geschwindigkeit ($t_4$–$t_5$) veranschlagt wird.

6. Waschmaschine und/oder Wäschetrockner mit motorgetriebener Trommel zur Durchführung des Verfahrens nach einem der Ansprüche 1 bis 5, dadurch gekennzeichnet, daß sie mindestens aufweist:
– einen Motor zum Antrieb der Trommel,
– ein Mittel zur Messung eines Beschleunigungswertes der Trommel, nämlich ein Beschleunigungsmesser oder ein Tachogeneratorsystem,
– ein Mittel zur Messung eines Werts des Motordrehmoments zum Antrieb der Trommel,

– ein Mittel zur Erfassung der gemessenen Werte der Trommelbeschleunigung und des dieser Beschleunigung entsprechenden Drehmomentwerts des Trommelantriebs, sowie zur Bestimmung des Massenträgheitsmoments der in die Trommel eingefüllten trockenen oder entwässerten Wäsche, aus diesen Werten, und

– eine Programmiereinrichtung zur Bestimmung der Wäschefüllmenge.

7. Waschmaschine und/oder Wäschetrockner mit durch Elektromotor angetriebener Trommel, zur Durchführung des Verfahrens nach einem der Ansprüche 1 bis 5, dadurch gekennzeichnet, daß sie mindestens aufweist

– einen elektrischen Trommelantriebsmotor mit einem zur Stärke des aufgenommenen elektrischen Stroms proportionalen Motordrehmoment,

– ein Mittel zur Messung der Stärke ·des vom Elektromotor zum Antrieb der Trommel aufgenommenen Stroms und ein Mittel zur Speicherung eines vorbestimmten Mittelwerts des Reibungsmoments der Trommel sowie eines vorbestimmten Werts des Trägheitsmoments der leeren Trommel, wobei diese Mittel Meßdaten der Trommelbeschleunigung und der Stärke des vom elektrischen Trommelantriebsmotor aufgenommenen Stroms erfassen und das Massenträgheitsmoment der in der Trommel befindlichen trockenen oder entwässerten Wäsche aus diesen gemessenen und vorbestimmten gespeicherten Daten bestimmen, und

– eine Programmiereinrichtung zur Bestimmung der Wäschefüllmenge.

8. Maschine nach Anspruch 7, dadurch gekennzeichnet, daß der Elektromotor ein Universalmotor ist.

9. Maschine nach einem der Ansprüche 7 und 8, dadurch gekennzeichnet, daß sie eine Programmiereinrichtung aufweist, die in Abhängigkeit von der Stärke des den Motor beim Antrieb der Trommel durchfließenden Stromes ($I_{M34}$) die Menge des Wasch- und Spülwassers und/oder die Wäschetrocknungsdauer bestimmt.

10. Maschine nach einem der Ansprüche 6 bis 8, die eine Programmiereinrichtung mit Mikroprogrammsystem für den automatischen Betriebsablauf besitzt, dadurch gekennzeichnet, daß sie mindestens eine Programmiereinrichtung mit Mikroprogrammsystem aufweist, die gemäß einem vorbestimmten Ablaufprogramm eine Bestimmung eines optimalen Betriebsprogramms in Abhängigkeit von der Wäschefüllung in der Trommel, umgesetzt in das Massenträgheitsmoment der Wäsche in der Trommel, vornimmt, wobei das Programm durch erfaßte Beschleunigungs- und Drehmomentdaten zum Antrieb der Trommel, durch angezeigte Daten und durch gespeicherte Werte des Reibungsmoments und des Trägheitsmoments der leeren Trommel bestimmt ist.

11. Maschine nach Anspruch 10, dadurch gekennzeichnet, daß bei der Bestimmung eines optimalen Betriebsprogramms das Mikroprogrammsystem den erforderlichen Wasserstand des Wasch- und Spülbads und/oder die Trocknungsdauer der Wäsche in Abhängigkeit von der Stärke des dem elektrischen Motor zum Antrieb der Trommel gelieferten Stroms festlegt.

# FIG_1

# FIG_2

FIG_3

# FIG_4

INTERFACE CAPTEURS

TABLEAU DE COMMANDE

MACHINE

SYSTEME MICROPROGRAMME

INTERFACE

INTERFACE COMMANDE

# FIG_5

$I_{34}$

$I_{M34}$

F

0   10   20   30   40   50   60   70   80   90   100%

Charge %